# EUROPÄISCHE PATENTSCHRIFT

(11) **EP 4 237 244 B1**
(45) Veröffentlichungstag und Bekanntmachung des Hinweises auf die Patenterteilung: **02.12.2026**
(21) Anmeldenummer: 21789756.0
(22) Anmeldetag: 11.10.2021
(51) Int. Cl.: B32B 17/10, B60J 1/02, C03C 17/36, G02B 27/01

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED RADIATION
DISPOSITIF DE PROJECTION POUR UN AFFICHAGE TÊTE HAUTE (HUD) À RAYONNEMENT P-POLARISÉ

(30) Priorität: 28.10.2020 EP 20204443
(43) Veröffentlichungstag der Anmeldung: 06.09.2023
(73) Patentinhaber: Saint-Gobain Sekurit France, 60150 Thourotte (FR)
(72) Erfinder: SCHMADTKE, Lisa, 52146 Würselen (DE); HAGEN, Jan, 53123 Bonn (DE); DO ROSARIO, Jefferson, 52064 Aachen (DE); GILLESSEN, Stephan, 52477 Alsdorf (DE)
(74) Vertreter: SGR Germany-Patents
(86) Internationale Anmeldenummer: PCT/EP2021/077996
(87) Internationale Veröffentlichungsnummer: WO 2022/089921

(56) Entgegenhaltungen:
- WO-A1-2021/104800
- WO-A1-2022/083988
- US-A1- 2017 242 247

## Beschreibung

Die Erfindung betrifft eine Projektionsanordnung für ein Head-Up-Display und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium. Auch die WO2019046157A1 offenbart ein HUD mit p-polarisierter Strahlung, wobei eine Reflexionsbeschichtung mit mindestens zwei metallischen Schichten verwendet wird.

US2017242247A1 offenbart eine weitere HUD-Projektionsanordnung mit einer Reflexionsbeschichtung für p-polarisierte Strahlung. Die Reflexionsbeschichtung kann eine oder mehrere leitfähige Silberschichten enthalten, darüber hinaus dielektrische Schichten. Das Reflexionsspektrum weist im relevanten Spektralbereich aber eine deutlich gekrümmte Form auf, so dass der Reflexionsgrad relativ stark wellenlängenabhängig ist. Dies ist nachteilhaft im Hinblick auf eine farbneutrale Darstellung der HUD-Projektion.

In WO2020083649A1 wird eine Projektionsanordnung für ein Fahrzeug umfassend eine Fahrzeugseitenscheibe mit Reflektionsbeschichtung und einen Projektor offenbart, wobei die Strahlung des Projektors überwiegend p-polarisiert ist und die Reflektionsbeschichtung geeignet ist p-polarisierte Strahlung zu reflektieren.

Die im HUD gezeigten Informationen, wie Geschwindigkeit oder auch Abstand zu vorausfahrenden Fahrzeugen, werden über im Fahrzeug integrierte Fahrassistenzsysteme bestimmt. Solche Fahrassistenzsysteme gewinnen mit zunehmender Entwicklung autonom fahrender Fahrzeuge immer mehr Bedeutung, so dass neu entwickelte Fahrzeugverglasungen selbstverständlich mit diesen kompatibel sein müssen. Moderne Fahrassistenzsysteme werden häufig auch mit dem Begriff ADAS (Advanced Driver Assistance Systems) bezeichnet und nutzen beispielsweise Ultraschall-, Radar-, Lidar- und/oder Kameratechnik. Je nach Art und Anwendung der Sensoren werden diese auch im Bereich der Fahrzeugverglasung, beispielsweise hinter der Windschutzscheibe eines Fahrzeugs, angebracht. Dabei ist darauf zu achten, dass die entsprechende Fahrzeugverglasung eine gute Transmission der vom Sensor zu detektierenden Strahlung aufweist. Darüber hinaus arbeiten diese Sensoren mit Polarisationskontrast, das heißt sie nutzen die unterschiedliche Transmission von s- und p-polarisierter Strahlung aus. Ein Maß hierfür ist das sogenannte Polarisationsverhältnis, das heißt der Quotient aus p-polarisierter zu s-polarisierter Strahlungsintensität. Etwaige Beschichtungen der Fahrzeugverglasung, wie beispielsweise Heizschichten oder Reflektionsbeschichtungen, gehen in der Regel mit einer verminderten Transmission einher. Um die ausreichende Funktion eines Sensors hinter einer solchen Beschichtung zu gewährleisten, kann die Beschichtung beispielsweise lokal entfernt werden. Dies führt zu zusätzlichen Prozessschritten und Kosten im Herstellungsverfahren. Ferner ist der entschichtete Bereich in Reflektion erkennbar. Eine solche Projektionsanordnung wird etwa offenbart in der WO2021104800A1.

Demnach besteht Bedarf an Projektionsanordnungen für HUDs mit Reflexionsbeschichtungen, die eine hohe Reflektivität gegenüber p-polarisierter Strahlung aufweisen und gleichzeitig eine ausreichend hohe Transmission und ein hohes Polarisationsverhältnis für hinter der Verglasung befindliche Kamerasysteme aufweisen. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Erfindungsgemäß wird p-polarisierte Strahlung zur Erzeugung des HUD-Bildes verwendet und die Verbundscheibe weist eine Reflexionsbeschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, so dass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die erfindungsgemäße Reflexionsbeschichtung bewirkt eine hohe Reflektivität gegenüber p-polarisierter Strahlung im Spektralbereich von 450 nm bis 650 nm, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Die einzelne Silberschicht setzt die Lichttransmission nicht übermäßig herab, so dass die Scheibe weiterhin als Windschutzscheibe verwendet werden kann. Das erfindungsgemäße Verhältnis der optischen Dicken der oberen und unteren dielektrischen Schichtenfolge bewirkt eine Glättung des Reflexionsspektrums, so dass eine farbneutrale Darstellung des HUD-Bildes gewährleistet ist. Die vorteilhaften Reflexionseigenschaften, insbesondere die Gleichmäßigkeit des Spektrums, erstrecken sich sogar über den HUD-relevanten Spektralbereich hinaus auf einen Spektralbereich von 400 nm bis 680 nm, so dass neben einer guten HUD-Darstellung ein positiver Gesamteindruck der Scheibe erreicht wird ohne störenden Farbstich. Neben den vorteilhaften HUD-Eigenschaften der Windschutzscheibe weist diese eine optimierte Sensorkompatibilität, insbesondere Kamerakompatibilität, auf. In Versuchen der Erfinder hat sich bei einem Verhältnis der optischen Dicke der oberen dielektrischen Schicht oder Schichtenfolge zur optischen Dicke der unteren dielektrischen Schicht oder Schichtenfolge zwischen 2,10 und 3,20 ein vorteilhaftes Verhältnis des p-polarisierten transmittierten Lichtes zum s-polarisierten transmittierten Licht entwickelt. Die Reflexionsbeschichtung umfasst keine dielektrischen Schichten, deren Brechungsindex weniger als 1,9 beträgt. Alle dielektrischen Schichten der Reflexionsbeschichtung weisen also einen Brechungsindex von mindestens 1,9 auf.

Die erfindungsgemäße Projektionsanordnung für ein Head-Up-Display (HUD) umfasst mindestens eine Windschutzscheibe, die mit einer Reflexionsbeschichtung versehen ist, und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die erfindungsgemäße Projektionsanordnung für ein HUD umfasst einen an der Windschutzscheibe angebrachten Sensor und ist besonders geeignet für Sensoren auf dem Gebiet der ADAS-Systeme. Mit dem Begriff ADAS-Systeme werden moderne Fahrassistenzsysteme bezeichnet, die beispielsweise Umfeldsensorik basierend auf Ultraschall-, Radar-, Lidar- und/oder Kameratechnik nutzen. Im Bereich der Windschutzscheibe können ein oder mehrere dieser oder anderer Sensoren angebracht werden.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Windschutzscheibe bezeichnet. Mit Außenscheibe wird die der äußeren Umgebung zugewandte Scheibe bezeichnet. Die Windschutzscheibe ist bevorzugt die Windschutzscheibe eines Kraftfahrzeugs, insbesondere eines Personen- oder Lastkraftwagens.

Die Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Der Projektor ist auf den HUD-Bereich der Windschutzscheibe gerichtet. Die Strahlung des Projektors ist überwiegend p-polarisiert. Die Reflexionsbeschichtung ist geeignet, p-polarisierte Strahlung zu reflektieren. Dadurch wird aus der Projektorstrahlung ein virtuelles Bild erzeugt, welches der Fahrer des Fahrzeugs von ihm aus gesehen hinter der Windschutzscheibe wahrnehmen kann.

Die erfindungsgemäße Reflexionsbeschichtung weist genau eine elektrisch leitfähige Schicht auf Basis von Silber auf. Genau eine leitfähige Schicht auf Basis von Silber bedeutet, dass die erfindungsgemäße Reflektionsbeschichtung nur diese eine leitfähige Schicht auf Basis von Silber enthält und keine weiteren Schichten auf Basis von Silber umfasst. Dies umfasst auch, dass erfindungsgemäß auf dem Substrat, auf dem die Reflektionsbeschichtung aufgebracht ist, weder unterhalb noch oberhalb der erfindungsgemäßen Reflektionsbeschichtung silberhaltige Schichten vorhanden sind. Unterhalb der elektrisch leitfähigen Schicht ist eine untere dielektrische Schicht oder Schichtenfolge angeordnet. Ebenso ist oberhalb der elektrisch leitfähigen Schicht eine obere dielektrische Schicht oder Schichtenfolge angeordnet. Die obere und die untere dielektrische Schicht oder Schichtenfolge weisen jeweils einen Brechungsindex auf, der mindestens 1,9 beträgt.

Brechungsindizes sind im Rahmen der vorliegenden Erfindung grundsätzlich bezogen auf eine Wellenlänge von 550 nm angegeben. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten. Der Brechungsindex kann mittels Ellipsometrie bestimmt werden. Ellipsometer sind kommerziell erhältlich, beispielsweise von der Firma Sentech. Der Brechungsindex einer oberen oder unteren dielektrischen Schicht wird vorzugsweise bestimmt, indem diese zunächst als einzelne Schicht auf einem Substrat abgeschieden wird und anschließend der Brechungsindex mittels Ellipsometrie gemessen wird. Zur Bestimmung des Brechungsindex einer oberen oder unteren dielektrischen Schichtenfolge werden die Schichten der Schichtenfolge jeweils alleine als Einzelschichten auf einem Substrat abgeschieden und anschließend der Brechungsindex mittels Ellipsometrie bestimmt. Für jede dieser Einzelschichten ist dabei erfindungsgemäß ein Brechungsindex von mindestens 1,9 zu erreichen. Dielektrische Schichten mit einem Brechungsindex von mindestens 1,9 sowie Verfahren zu deren Abscheidung sind dem Fachmann auf dem Gebiet der Dünnschichten bekannt. Bevorzugt werden Methoden der physikalischen Gasphasenabscheidung, insbesondere Magnetronsputtern eingesetzt.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Erfindungsgemäß liegt das Verhältnis der optischen Dicke der oberen dielektrischen Schicht oder Schichtenfolge zur optischen Dicke der unteren dielektrischen Schicht oder Schichtenfolge zwischen 2,10 und 3,20. Es hat sich gezeigt, dass eine solche Asymmetrie der optischen Dicken zu einem deutlich glatteren Reflexionsspektrum gegenüber p-polarisierter Strahlung führt, so dass über den gesamten relevanten Spektralbereich (400 nm bis 680 nm) ein relativ konstanter Reflexionsgrad vorliegt. Dadurch wird eine farbneutrale Darstellung der HUD-Projektion gewährleistet und ein farbneutraler Gesamteindruck der Scheibe sichergestellt. Darüber hinaus hat sich in diesem kleinen Verhältnisbereich der optischen Dicken ein besonders vorteilhaftes Polarisationsverhältnis p-polarisierten Lichtes zu s-polarisiertem Licht gezeigt. Das Polarisationsverhältnis ist dabei definiert als das Verhältnis der Transmission p-polarisierten Lichtes zur Transmission s-polarisierten Lichtes. Ein Sensor, beispielsweise eine Kamera, in dessen Strahlengang sich die erfindungsgemäße Reflektionsbeschichtung befindet, kann nur das von der Reflektionsbeschichtung transmittierte Licht wahrnehmen, wodurch bei Verwendung eines Sensors hinter der Windschutzscheibe eine hohe Transmission wünschenswert ist. Insbesondere sollte die Transmission p-polarisierten Lichtes im Vergleich zu s-polarisiertem Licht überwiegen und möglichst hoch liegen. Das Polarisationsverhältnis des transmittierten Lichtes ist dabei entscheidend um bei nassen Straßenverhältnissen auftretende Blendeffekte zu vermeiden, die die Kamerasicht einschränken. Um diese Blendeffekte zu unterdrücken muss die Transmission des p-polarisierten Lichtes die Transmission von s-polarisiertem Licht überwiegen. Die Anforderung an eine gute HUD-Bildqualität, die einen hohen Reflektionsgrad p-polarisierten Lichtes an der Reflektionsbeschichtung erforderlich macht, ist dabei gegenläufig zu der für Kameraanwendungen gewünschten hohen Transmission. Die Erfinder haben festgestellt, dass innerhalb der erfindungsgemäßen Verhältnisse der optischen Dicken eine für HUD-Anwendungen ausreichende Reflektivität für p-polarisiertes Licht erreicht werden kann und gleichzeitig das durch die Windschutzscheibe transmittierte Licht ein vorteilhaftes Verhältnis von p-polarisiertem Licht zu s-polarisiertem Licht aufweist. Innerhalb der genannten engen Grenzen der Verhältnisse der optischen Dicken ist somit eine für Kameraanwendungen optimierte Projektionsanordnung für ein Head-Up-Display erhältlich.

Das erfindungsgemäße Verhältnis der optischen Dicken berechnet sich als Quotient aus der optischen Dicke der oberen dielektrischen Schicht oder Schichtenfolge (Divident) geteilt durch die optische Dicke der unteren dielektrischen Schicht oder Schichtenfolge (Divisor).

In einer bevorzugten Ausgestaltung liegt das das Verhältnis der optischen Dicke der oberen dielektrischen Schicht oder Schichtenfolge zur optischen Dicke der unteren dielektrischen Schicht oder Schichtenfolge zwischen 2,14 und 3,10, bevorzugt zwischen 2,20 und 3,10, besonders bevorzugt zwischen 2,30 und 2,98, insbesondere zwischen 2,50 und 2,97. Damit werden besonders gute Ergebnisse erzielt.

Bevorzugt wird mittels der erfindungsgemäßen Reflektionsbeschichtung ein Polarisationsverhältnis von p-polarisiertem Licht zu s-polarisiertem Licht erreicht, das bei einem Transmissionswinkel von 55° mindestens 1,28, bei einem Transmissionswinkel von 61° mindestens 1,41 und/oder bei einem Transmissionswinkel von 67° mindestens 1,59 beträgt. Der Transmissionswinkel ist der Winkel unter dem ein durch die Windschutzscheibe tretender Strahl transmittiert wird. Der Transmissionswinkel wird bestimmt als der Winkel zwischen der Flächennormale der Windschutzscheibe und dem transmittierten austretenden Strahl. Ein hinter der Windschutzscheibe vorgesehener Sensor wird vorzugsweise in dem Transmissionswinkel vorgesehen, für den die Reflektionsbeschichtung optimiert ist. Die genannten Grenzwerte des Polarisationsverhältnisses entsprechen den Spezifikationen einschlägiger Kamerasysteme. Besonders bevorzugt werden mindestens zwei der genannten Grenzwerte des Polarisationsverhältnisses erreicht. Insbesondere werden von der erfindungsgemäßen Reflektionsbeschichtung alle drei der genannten Grenzwerte des Polarisationsverhältnisses erreicht. Dies ist vorteilhaft, da auf diese Weise eine Kamera in verschiedenen Transmissionswinkeln verwendet werden kann.

Erfindungsgemäß umfasst die Windschutzscheibe der erfindungsgemäßen Projektionsanordnung einen Sensorbereich. In diesem Sensorbereich ist ein Sensor so an der Außenseite der Innenscheibe angebracht, dass Strahlung durch die Reflektionsbeschichtung hindurch fällt und vom Sensor detektiert wird. Die Projektionsanordnung wird vorzugsweise bereits bei Herstellung mit einem Sensor versehen, der im Sensorbereich durch die Windschutzscheibe tretende Strahlung detektiert. Die Windschutzscheibe der erfindungsgemäßen Projektionsanordnung ist jedoch auch vorteilhaft zur Nachrüstung von Sensoren oder Verwendung von auf dem Armaturenbrett aufgestellter Kameras (auch als *dashcam* bezeichnet). Die erfindungsgemäße Reflektionsbeschichtung ist hinsichtlich ihrer Kompatibilität mit Kamerasystemen optimiert, wodurch eine Kamera an beliebiger Stelle vorgesehen werden kann. Auf die Entschichtung eines Kamerafensters kann dabei verzichtet werden.

Die Reflektionsbeschichtung befindet sich im Strahlengang des Sensors. Der Sensor ist dabei hinter der Windschutzscheibe, also im Einbauzustand der Windschutzscheibe im Innenraum des Fahrzeugs, vorgesehen und an der Außenseite der Innenscheibe befestigt. Der Sensor ist bevorzugt ein Ultraschall-Sensor, ein Radar-Sensor, ein Lidar-Sensor und/oder eine Kamera. Besonders bevorzugt ist der Sensor eine Kamera, die Strahlung im sichtbaren Bereich des Lichtspektrums detektiert. Die erfindungsgemäße Reflektionsbeschichtung erreicht die in den Spezifikationen einschlägiger Kamerasysteme geforderten Grenzwerte für das Verhältnis des p-polarisierten transmittierten Lichtes zum s-polarisierten transmittierten Licht.

Die Reflexionsbeschichtung ist bevorzugt auf einer der Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die Reflexionsbeschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Die Reflexionsbeschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. Es können Teilbereiche oder auch großflächige Bereiche mit der Reflexionsbeschichtung versehen sein und die Windschutzscheibe kann im wesentlichen vollflächig mit der Reflexionsbeschichtung versehen sein, was herstellungsbedingt bevorzugt sein kann. In einer Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, so dass die Reflexionsbeschichtung im Innern der Windschutzscheibe vor Korrosion und Beschädigung geschützt ist.

Die erfindungsgemäße Reflexionsbeschichtung weist aufgrund der elektrisch leitfähigen Silberschicht IR-reflektierende Eigenschaften auf, so dass sie als Sonnenschutzbeschichtung fungiert, welche die Aufheizung des Fahrzeuginnenraums durch Reflexion der Wärmestrahlung verringert. Die Reflexionsbeschichtung kann auch als Heizbeschichtung verwendet werden, wenn sie elektrisch kontaktiert wird, so dass ein Strom durch sie fließt, welcher die Reflexionsbeschichtung erwärmt.

Die mit der Reflexionsbeschichtung versehene Windschutzscheibe weist bevorzugt im Spektralbereich von 400 nm bis 680 nm einen gemittelten Reflexionsgrad gegenüber p-polarisierter Strahlung von mindestens 15% auf, besonders bevorzugt von mindestens 20%. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der Spektralbereich von 400 nm bis 680 nm wurde zur Charakterisierung der Reflexionseigenschaften herabgezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn die Reflexionsgrad im gesamten Spektralbereich von 400 nm bis 680 nm mindestens 15 %, bevorzugt mindestens 20 % beträgt, so dass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 400 nm bis 680 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 3 % betragen, besonders bevorzugt höchstens 2 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert. Die angegebene Glätte des Reflexionsspektrums kann mit der erfindungsgemäßen Reflexionsbeschichtung aufgrund ihrer elektrisch leitfähigen Schicht problemlos erreicht werden.

Als Maß für die Glätte des Reflexionsspektrums kann alternativ die Standardabweichung im Spektralbereich von 400 nm bis 680 nm herangezogen werden. Sie beträgt bevorzugt kleiner 1%, besonders bevorzugt kleiner 0,9 %, ganz besonders bevorzugt kleiner 0,8 %.

Die oben genannten gewünschten Reflexionscharakteristika werden insbesondere durch die Wahl der Materialien und Dicken der Einzelschichten sowie den Aufbau der dielektrischen Schichtenfolgen erreicht. Die Reflexionsbeschichtung kann so geeignet eingestellt werden.

Die Reflexionsbeschichtung ist ein Dünnschichtstapel, also eine Schichtenfolge dünner Einzelschichten. Dieser Dünnschichtstapel enthält genau eine elektrisch leitfähige Schicht auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht auf Basis von Silber kann auch vereinfacht als Silberschicht bezeichnet werden. Die Reflexionsbeschichtung enthält genau eine Silberschicht, also nicht mehr als eine Silberschicht, und auch oberhalb oder unterhalb der Reflexionsbeschichtung sind keine weiteren Silberschichten angeordnet. Es ist ein besonderer Vorteil der vorliegenden Erfindung, dass mit einer Silberschicht die gewünschten Reflexionseigenschaften erreicht werden können, ohne dass die Transmission zu stark herabgesetzt würde, wie es bei der Verwendung mehrerer leitfähiger Schichten der Fall wäre. Es können aber weitere elektrisch leitfähige Schichten vorliegen, die nicht wesentlich zur elektrischen Leitfähigkeit der Reflexionsbeschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtenfolgen angeordnet sind.

Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Die geometrische Schichtdicke der Silberschicht beträgt bevorzugt höchstens 15 nm, besonders bevorzugt höchstens 14 nm, ganz besonders bevorzugt höchstens 13 nm. Dadurch kann eine vorteilhafte Reflektivität im IR-Bereich erreicht werden, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschicht von 10 nm bis 14 nm oder von 11 nm bis 13 nm.

Die Reflexionsbeschichtung umfasst keine dielektrischen Schichten, deren Brechungsindex weniger als 1,9 beträgt. Alle dielektrischen Schichten der Reflexionsbeschichtung weisen also einen Brechungsindex von mindestens 1,9 auf. In Versuchen der Erfinder hat sich gezeigt, dass die Verwendung niedrigbrechender Schichten, wie Siliziumdioxid, einen unvorteilhaften Einfluss auf das Verhältnis der optischen Dicken hat und ein damit einhergehendes ungünstiges Reflektionsverhalten für p-polarisierte Strahlung auftritt. Es ist ein besonderer Vorteil der vorliegenden Erfindung, dass die gewünschten Reflexionseigenschaften allein mit relativ hochbrechenden dielektrischen Schichten erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erfindungsgemäße Reflexionsbeschichtung so schnell und kostengünstig herstellen.

Die Reflexionsbeschichtung enthält oberhalb und unterhalb der Silberschicht unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Schichten dieser Materialien mit einem Brechungsindex von mindestens 1,9 als solche in Form von Einzelschichten sind bekannt und dem Fachmann über bekannte Methoden zugänglich. Vorzugsweise werden zur Abscheidung dieser Schichten Methoden der physikalischen Gasphasenabscheidung eingesetzt, insbesondere Magnetronsputtern.

Die optische Dicke der oberen dielektrischen Schicht oder Schichtenfolge beträgt bevorzugt von 100 nm bis 200 nm, besonders bevorzugt von 130 nm bis 170 nm. Die optische Dicke der unteren dielektrischen Schicht oder Schichtenfolge beträgt bevorzugt von 30 nm bis 100 nm, besonders bevorzugt von 40 nm bis 65 nm. Damit werden gute Ergebnisse erzielt.

In einer vorteilhaften Ausgestaltung ist oberhalb und unterhalb der Silberschicht jeweils eine dielektrische Schicht angeordnet, die als Entspiegelungsschicht bezeichnet werden kann und bevorzugt auf Basis eines Oxids, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen Schichtenfolge beziehungsweise die unterste Schicht der unteren Schichtenfolge. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

Neben der Entspiegelungsschicht können optional weitere dielektrische Schichten mit Brechungsindex von mindestens 1,9 vorhanden sein. So können die obere und untere Schichtenfolge unabhängig voneinander eine Anpassungsschicht enthalten, welche die Reflektivität der Silberschicht verbessern. Die Anpassungsschichten sind bevorzugt auf Basis von Zinkoxid ausgebildet, besonders bevorzugt Zinkoxid ZnO_{1-δ} mit 0 ≤ δ ≤ 0,01. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten vorhanden sein, die einen höheren Brechungsindex aufweisen als die Entspiegelungsschicht, ebenfalls unabhängig voneinander in der oberen und der unteren Schichtenfolge. Dadurch können die optischen Eigenschaften weiter verbessert und feineingestellt werden, insbesondere die Reflexionseigenschaften. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂ und/oder AIN in Betracht. Die brechungsindexsteigernden Schichten sind bevorzugt zwischen der Entspiegelungsschicht und der Silberschichtung angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer Ausgestaltung der Erfindung ist unterhalb der elektrisch leitfähigen Schicht genau eine untere dielektrische Schicht mit einem Brechungsindex von mindestens 1,9 angeordnet, bevorzugt auf Basis von Siliziumnitrid. Ebenso ist oberhalb der elektrisch leitfähigen Schicht genau eine obere dielektrische Schicht mit einem Brechungsindex von mindestens 1,9 angeordnet, bevorzugt auf Basis von Siliziumnitrid. Es ergibt sich die Schichtenfolge ausgehend vom Substrat: untere Entspiegelungsschicht - Silberschicht - obere Entspiegelungsschicht. Die Reflexionsbeschichtung enthält keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

In einer weiteren Ausgestaltung der Erfindung ist unterhalb der elektrisch leitfähigen Schicht eine erste untere dielektrische Schicht (Entspiegelungsschicht) und eine zweite untere dielektrische Schicht (Anpassungsschicht) angeordnet. Ebenso ist oberhalb der elektrisch leitfähigen Schicht eine erste obere dielektrische Schicht (Entspiegelungsschicht) und eine zweite obere dielektrische Schicht (Anpassungsschicht) angeordnet. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: untere Entspiegelungsschicht - untere Anpassungsschicht - Silberschicht - obere Anpassungsschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm.

In einer weiteren Ausgestaltung der Erfindung ist unterhalb der elektrisch leitfähigen Schicht eine erste untere dielektrische Schicht (Entspiegelungsschicht), eine zweite untere dielektrische Schicht (Anpassungsschicht) und eine dritte untere dielektrische Schicht (brechungsindexsteigernde Schicht) angeordnet. Ebenso ist oberhalb der elektrisch leitfähigen Schicht eine erste obere dielektrische Schicht (Entspiegelungsschicht), eine zweite obere dielektrische Schicht (Anpassungsschicht) und eine dritte obere dielektrische Schicht (brechungsindexsteigernde Schicht) angeordnet. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

Da die obere und die untere dielektrische Schichtenfolge unabhängig voneinander ausgebildet werden können, sind auch Kombinationen der vorstehend beschriebenen Ausgestaltungen möglich, wobei die obere dielektrische Schicht/Schichtenfolge gemäß einer Ausgestaltung ausgebildet ist und die untere dielektrische Schicht/Schichtenfolge gemäß einer anderen. Es ergeben sich die folgenden bevorzugten Schichtenfolgen (jeweils ausgehend vom Substrat, also derjenigen Oberfläche, auf die die Reflexionsbeschichtung abgeschieden ist:
- untere Entspiegelungsschicht - Silberschicht - obere Entspiegelungsschicht
- untere Entspiegelungsschicht - Silberschicht - obere Anpassungsschicht - obere Entspiegelungsschicht
- untere Entspiegelungsschicht - Silberschicht - obere Anpassungsschicht - obere brechungsindexsteigernde Schicht - obere Entspiegelungsschicht
- untere Entspiegelungsschicht - untere Anpassungsschicht - Silberschicht - obere Entspiegelungsschicht
- untere Entspiegelungsschicht - untere Anpassungsschicht - Silberschicht - obere Anpassungsschicht - obere Entspiegelungsschicht
- untere Entspiegelungsschicht - untere Anpassungsschicht - Silberschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - obere Entspiegelungsschicht
- untere Entspiegelungsschicht - untere brechungsindexsteigernde Schicht - untere Anpassungsschicht - Silberschicht - obere Anpassungsschicht - obere Entspiegelungsschicht
- untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht

In einer vorteilhaften Ausgestaltung umfasst die Reflexionsbeschichtung mindestens eine metallische Blockerschicht. Die Blockerschicht kann unterhalb und/oder oberhalb der Silberschicht angeordnet sein und steht bevorzugt mit der Silberschicht in direktem Kontakt. Die Blockerschicht liegt dann zwischen Silberschicht und dielektrischer Schicht/Schichtenfolge. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan oder einer Nickel-Chrom-Legierung ausgebildet.

Die Blockerschicht ändert die optischen Eigenschaften der Reflexionsbeschichtung nur unwesentlich und ist bevorzugt bei allen vorstehend beschriebenen Ausgestaltungen vorhanden. Besonders bevorzugt ist die Blockerschicht direkt oberhalb der Silberschicht angeordnet, also zwischen Silberschicht und oberer dielektrischer Schicht(enfolge), wo sie besonders effektiv ist. Es ergeben sich folgende bevorzugte Schichtenfolgen:
- untere Entspiegelungsschicht - Silberschicht - Blockerschicht - obere Entspiegelungsschicht
- untere Entspiegelungsschicht - Silberschicht - Blockerschicht - obere Anpassungsschicht - obere Entspiegelungsschicht
- untere Entspiegelungsschicht - Silberschicht - Blockerschicht - obere Anpassungsschicht - obere brechungsindexsteigernde Schicht - obere Entspiegelungsschicht
- untere Entspiegelungsschicht - untere Anpassungsschicht - Silberschicht - Blockerschicht - obere Entspiegelungsschicht
- untere Entspiegelungsschicht - untere Anpassungsschicht - Silberschicht - Blockerschicht - obere Anpassungsschicht - obere Entspiegelungsschicht
- untere Entspiegelungsschicht - untere Anpassungsschicht - Silberschicht - Blockerschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - Blockerschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere brechungsindexsteigernde Schicht - obere Entspiegelungsschicht

Es kann jeweils optional eine zusätzliche Blockerschicht direkt unterhalb der Silberschicht angeordnet sein, also zwischen Silberschicht und unterer dielektrischer Schicht(enfolge).

Der Projektor ist innenraumseitig der Windschutzscheibe angeordnet und bestrahlt die Windschutzscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist erfindungsgemäß überwiegend p-polarisiert, weist also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die
Einfallsebene wird durch den Einfallsvektor und die Flächennormale der Windschutzscheibe im geometrischen Zentrum des bestrahlten Bereichs aufgespannt.

Die Strahlung des Projektors trifft bevorzugt mit einem Einfallswinkel von 45° bis 70°, insbesondere von 55° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Windschutzscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch Windschutzscheibe (samt Reflexionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflekivität der Windschutzscheibe verringert werden, wodurch der Eindruck der Scheibe angenehmer gestaltet wird für einen äußeren Betrachter. Um allerdings die vorgeschriebene Lichttransmission von 70% für Windschutzscheiben zu gewährleisten (Gesamttransmission), sollte die Außenscheibe bevorzugt eine Lichttransmission von mindestens 80% aufweisen, besonders bevorzugt von mindestens 85%. Die Lichttransmission beschreibt dabei den bei einem Einstrahlwinkel von 0° transmittierten Strahlungsanteil innerhalb des sichtbaren Spektrums im Spektralbereich von 380 nm bis 780 nm. Die Lichttransmission ist mittels dem Fachmann bekannter Methoden mit kommerziell erhältlichen Messgeräten bestimmbar, beispielsweise mit Spektrometern der Firma Perkin Elmer. Die Innenscheibe und die Zwischenschicht sind bevorzugt klar, also nicht getönt oder gefärbt. Beispielsweise kann grün oder blau gefärbtes Glas als Außenscheibe eingesetzt werden.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm.

Die Windschutzscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Reflexionsbeschichtung wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Beschichtung wird bevorzugt vor der Lamination aufgebracht. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird.

Soll die Windschutzscheibe gebogen sein, so werden die Außenscheibe und die Innenscheibe bevorzugt vor der Lamination und bevorzugt nach dem Beschichtungsprozess einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Erfindung umfasst außerdem die Verwendung einer erfindungsgemäß ausgebildeten Windschutzscheibe als Projektionsfläche einer Projektionsanordnung für ein Head-Up-Display, wobei ein Projektor auf den HUD-Bereich gerichtet ist, dessen Strahlung überwiegend p-polarisiert ist. Die vorstehend beschriebenen bevorzugten Ausgestaltungen gelten für die Verwendung entsprechend.

Die Erfindung umfasst weiter die Verwendung einer erfindungsgemäßen Projektionsanordnung als HUD in einem Kraftfahrzeug, insbesondere einem Personenkraftwagen oder Lastkraftwagen. Besonders bevorzugt wird die Projektionsanordnung als HUD dabei in Kombination mit einem Sensor, insbesondere einer Kamera, verwendet, wobei die Reflektionsbeschichtung im Strahlengang des Sensors liegt.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine erfindungsgemäße Projektionsanordnung als Head-Up-Display mit einem HUD-Bereich und einem Sensorbereich,
- Fig. 2: einen Querschnitt entlang der Schnittlinie A-A' durch die Projektionsanordnung der Figur 1,
- Fig. 3: einen Querschnitt durch eine Verbundscheibe gemäß einer weiteren Ausführungsform der erfindungsgemäßen Projektionsanordnung entlang der Schnittlinie A-A' der Figur 1,
- Fig. 4: einen Querschnitt durch eine Ausgestaltung der erfindungsgemäßen Reflexionsbeschichtung auf einer Innenscheibe,
- Fig. 5: Reflexionsspektren von Verbundscheiben gegenüber p-polarisierter Strahlung gemäß Beispiel 3 und den Vergleichsbeispielen 4 und 9.

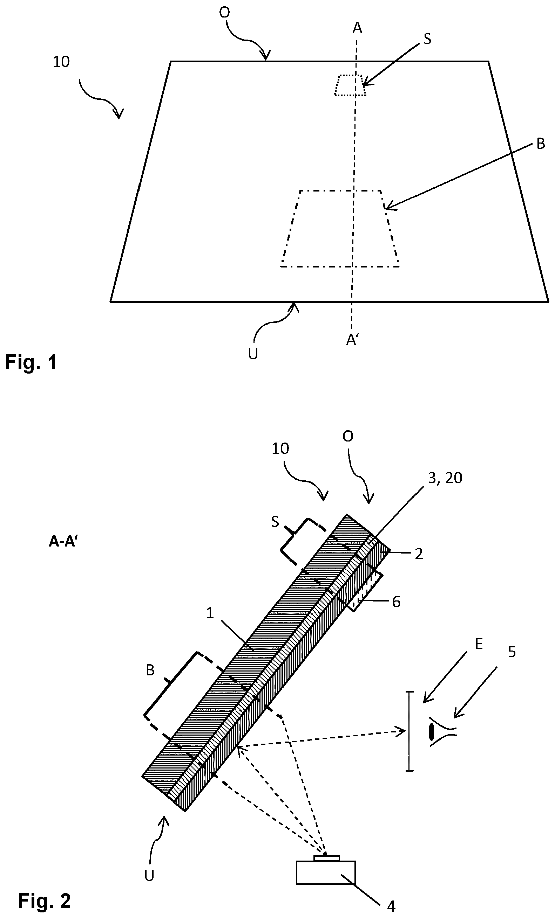

Figuren 1 und 2 zeigen eine erfindungsgemäße Projektionsanordnung für ein HUD, wobei in Figur 1 eine Draufsicht und in Figur 2 ein Querschnitt entlang der Schnittlinie AA' der Figur 1 gezeigt ist. Die Projektionsanordnung umfasst eine Windschutzscheibe 10, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden. Die Windschutzscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum. Zwischen der Innenseite der Außenscheibe 1 und der Innenseite der Innenscheibe 2 ist eine Reflektionsbeschichtung 20 angeordnet. Diese kann an der Innenseite der Außenscheibe 1 oder der Innenseite der Innenscheibe 2 angeordnet sein oder in der thermoplastischen Zwischenschicht 3 integriert sein.

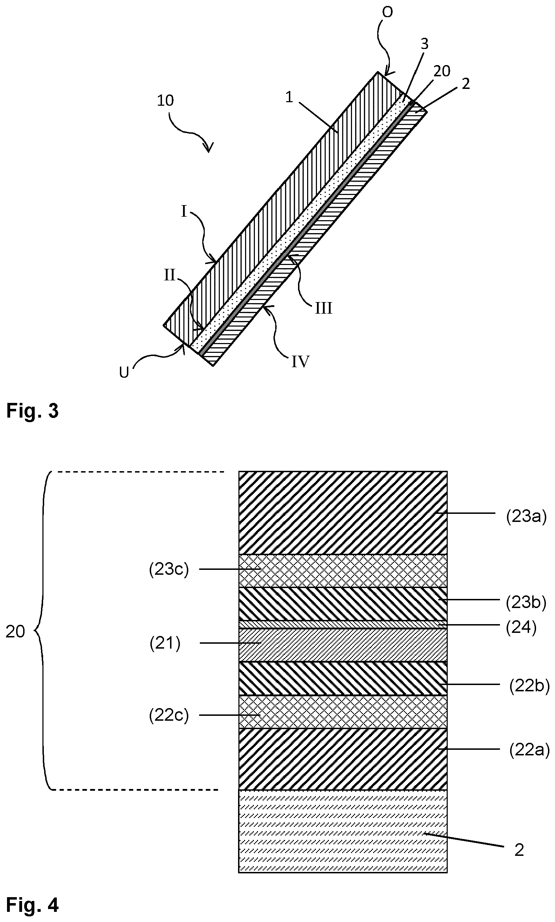

Figur 3 zeigt eine weitere Ausgestaltung einer erfindungsgemäß ausgebildeten Windschutzscheibe 10. Die über die Windschutzscheibe 10 hinausgehenden Komponenten der Projektionsanordnung entsprechen den Figuren 1 und 2 und sind in Figur 3 nicht gezeigt. Die Außenscheibe 1 weist eine außenseitige Oberfläche I auf (auch als Außenseite der Außenscheibe bezeichnet), die in Einbaulage der äußeren Umgebung zugewandt ist, und eine innenraumseitige Oberfläche II (auch als Innenseite der Außenscheibe bezeichnet), die in Einbaulage dem Innenraum zugewandt ist. Ebenso weist die Innenscheibe 2 eine außenseitige Oberfläche III auf (auch als Innenseite der Innenscheibe bezeichnet), die in Einbaulage der äußeren Umgebung zugewandt ist, und eine innenraumseitige Oberfläche IV (auch als Außenseite der Innenscheibe bezeichnet), die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm oder 2,1 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 (Innenseite der Innenscheibe) ist mit einer erfindungsgemäßen Reflexionsbeschichtung 20 versehen, die als Reflexionsfläche für die Projektorstrahlung (und eventuell zusätzlich als IR-reflektierende Beschichtung) vorgesehen ist.

Der Strahlung des Projektors 4 ist erfindungsgemäß p-polarisiert, insbesondere im Wesentlichen rein p-polarisiert. Da der Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen **I,** IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des Projektors 4 zur Erzeugung der HUD-Projektion.

Figur 4 zeigt die Schichtenfolge einer Ausgestaltung der erfindungsgemäßen Reflexionsbeschichtung 20. Die Reflexionsbeschichtung 20 ist ein Stapel von Dünnschichten. Die Reflexionsbeschichtung 20 umfasst eine elektrisch leitfähige Schicht 21 auf Basis von Silber. Direkt oberhalb der elektrisch leitfähigen Schicht 21 ist eine metallische Blockerschicht 24 angeordnet. Darüber ist eine obere dielektrische Schichtenfolge angeordnet, die von unten nach oben aus einer oberen Anpassungsschicht 23b, einer oberen brechungsindexsteigernden Schicht 23c und einer oberen Entspiegelungsschicht 23a. Unterhalb der elektrisch leitfähigen Schicht 21 ist eine untere dielektrische Schichtenfolge angeordnet, die von oben nach unten aus einer unteren Anpassungsschicht 22b, einer unteren brechungsindexsteigernden Schicht 22c und einer unteren Entspiegelungsschicht 22a.

Der dargestellte Schichtaufbau ist lediglich beispielhaft zu versehen. So können die dielektrischen Schichtenfolgen auch mehr oder weniger Schichten umfassen, solange mindestens eine dielektrische Schicht oberhalb und unterhalb der leitfähigen Schicht 21 vorhanden ist. Die dielektrischen Schichtenfolgen müssen auch nicht symmetrisch sein. Beispielhafte Materialien und Schichtdicken können den nachfolgenden Beispielen entnommen werden. Die gezeigten dielektrischen Schichten und die Silberschicht wurden mittels Magnetronsputtern abgeschieden.

Die Schichtenfolgen einer Windschutzscheibe 10 mit der Reflexionsbeschichtung 20 auf der außenseitigen Oberfläche III der Innenscheibe 2 gemäß der erfindungsgemäßen Beispiele 1 bis 8 sind, zusammen mit den Materialien und geometrische Schichtdicken der Einzelschichten, in Tabellen 1a und 1b dargestellt. Die dielektrischen Schichten können unabhängig voneinander dotiert sein, beispielsweise mit Bor oder Aluminium.

**Tabelle 1a**

| Material | Bezugszeichen | | Schichtdicke | | | |
|---|---|---|---|---|---|---|
| | | | Beispiel 1 | Beispiel 2 | Beispiel 3 | Beispiel 4 |
| Kalk-Natron-Glas | 1 | | 2,1 mm | 2,1 mm | 2,1 mm | 2,1 mm |
| PVB | 3 | | 0,76 mm | 0,76 mm | 0,76 mm | 0,76 mm |
| Si₃N₄ | 20 | 23a | 45 nm | 50 nm | 55 nm | 60 nm |
| SiZrN | | 23c | 10 nm | 10 nm | 10 nm | 10 nm |
| ZnO | | 23b | 10 nm | 10 nm | 10 nm | 10 nm |
| NiCr | | 24 | 0,3 nm | 0,3 nm | 0,3 nm | 0,3 nm |
| **Ag** | | **21** | **12 nm** | **12 nm** | **12 nm** | **12 nm** |
| ZnO | | 22b | 10 nm | 10 nm | 10 nm | 10 nm |
| SiZrN | | 22c | 10 nm | 10 nm | 10 nm | 10 nm |
| Si₃N₄ | | 22a | 10 nm | 10 nm | 10 nm | 10 nm |
| Kalk-Natron-Glas | 2 | | 2,1 mm | 2,1 mm | 2,1 mm | 2,1 mm |

**Tabelle 1b**

| Material | Bezugszeichen | | Schichtdicke | | | |
|---|---|---|---|---|---|---|
| | | | Beispiel 5 | Beispiel 6 | Beispiel 7 | Beispiel 8 |
| Kalk-Natron-Glas | 1 | | 2,1 mm | 2,1 mm | 2,1 mm | 2,1 mm |
| PVB | 3 | | 0,76 mm | 0,76 mm | 0,76 mm | 0,76 mm |
| Si₃N₄ | 20 | 23a | 40 nm | 45 nm | 45 nm | 55 nm |
| SiZrN | | 23c | 10 nm | 10 nm | 0 nm | 10 nm |
| ZnO | | 23b | 10 nm | 10 nm | 10 nm | 10 nm |
| NiCr | | 24 | 0,3 nm | 0,3 nm | 0,3 nm | 0,3 nm |
| **Ag** | | **21** | **12 nm** | **12 nm** | **12 nm** | **12 nm** |
| ZnO | | 22b | 10 nm | 10 nm | 10 nm | 10 nm |
| SiZrN | | 22c | 10 nm | 10 nm | 0 nm | 10 nm |
| Si₃N₄ | | 22a | 5 nm | 5 nm | 10 nm | 5 nm |
| Kalk-Natron-Glas | 2 | 2,1 mm | 2,1 mm | 2,1 mm | 2,1 mm | |

Zum Vergleich wurden Vergleichsbeispiele 1 bis 8 untersucht, die nicht die erfindungsgemäßen Merkmale erfüllen. Ihre Schichtenfolgen sind in Tabellen 2a und 2b dargestellt.

**Tabelle 2a**

| Material | Bezugszeichen | | Schichtdicke | | | |
|---|---|---|---|---|---|---|
| | | | Vergleichsbeispiel 1 | Vergleichsbeispiel 2 | Vergleichsbeispiel 3 | Vergleichsbeispiel 4 |
| Kalk-Natron-Glas | 1 | | 2,1 mm | 2,1 mm | 2,1 mm | 2,1 mm |
| PVB | 3 | | 0,76 mm | 0,76 mm | 0,76 mm | 0,76 mm |
| Si₃N₄ | **20** | 23a | 40 nm | 50 nm | 55 nm | 60 nm |
| SiZrN | | 23c | 10 nm | 10 nm | 10 nm | 10 nm |
| ZnO | | 23b | 10 nm | 10 nm | 10 nm | 10 nm |
| NiCr | | 24 | 0,3 nm | 0,3 nm | 0,3 nm | 0,3 nm |
| **Ag** | | **21** | **12 nm** | **12 nm** | **12 nm** | **12 nm** |
| ZnO | | 22b | 10 nm | 10 nm | 10 nm | 10 nm |
| SiZrN | | 22c | 10 nm | 10 nm | 10 nm | 10 nm |
| Si₃N₄ | | 22a | 20 nm | 20 nm | 20 nm | 20 nm |
| Kalk-Natron-Glas | 2 | | 2,1 mm | 2,1 mm | 2,1 mm | 2,1 mm |

**Tabelle 2b**

| Material | Bezugszeichen | | Schichtdicke | | | |
|---|---|---|---|---|---|---|
| | | | Vergleichsbeispiel 5 | Vergleichsbeispiel 6 | Vergleichsbeispiel 7 | Vergleichsbeispiel 8 |
| Kalk-Natron-Glas | 1 | | 2,1 mm | 2,1 mm | 2,1 mm | 2,1 mm |
| PVB | 3 | | 0,76 mm | 0,76 mm | 0,76 mm | 0,76 mm |
| Si₃N₄ | 20 | 23a | 45 nm | 55 nm | 60 nm | 65 nm |
| SiZrN | | 23c | 10 nm | 0 nm | 0 nm | 0 nm |
| ZnO | | 23b | 10 nm | 10 nm | 10 nm | 10 nm |
| NiCr | | 24 | 0,3 nm | 0,3 nm | 0,3 nm | 0,3 nm |
| **Ag** | | **21** | **12 nm** | **12 nm** | **12 nm** | **12 nm** |
| ZnO | | 22b | 10 nm | 10 nm | 10 nm | 10 nm |
| SiZrN | | 22c | 10 nm | 0 nm | 0 nm | 0 nm |
| Si₃N₄ | | 22a | 20 nm | 10 nm | 10 nm | 10 nm |
| Kalk-Natron-Glas | 2 | | 2,1 mm | 2,1 mm | 2,1 mm | 2,1 mm |

Die Beispiele und die Vergleichsbeispiele unterscheiden sich in erster Linie durch das Verhältnis der optischen Dicke der oberen dielektrischen Schichtenfolge zur optischen Dicke der unteren dielektrischen Schichtenfolge. Die optische Dicke ergibt sich jeweils als Produkt aus der in den Tabellen 1a, 1b und 2a, 2b dargestellten geometrischen Dicke und dem Brechungsindex, wobei für Si₃N₄ ein Wert von 2,0, für SiZrN ein Wert von 2,1 und für ZnO ein Wert von 2,0 verwendet wird. Die optischen Dicken und ihr Verhältnis sind in Tabellen 3a, 3b, 3c zusammengefasst. Das Verhältnis ϕ beschreibt das Verhältnis der optischen Dicke der oberen dielektrischen Schicht 23a bzw. Schichtenfolge 23a, 23b, ggf. 23c zur optischen Dicke der unteren dielektrischen Schicht 22a oder Schichtenfolge 22a, 22b, ggf. 22c. Neben den optischen Dicken und dem Verhältnis der optischen Dicken, sind in Tabellen 3a, 3b und 3c auch das Polarisationsverhältnis p-polarisierter Strahlung zu s-polarisierter Strahlung in Transmission unter verschiedenen Transmissionswinkeln und die Gesamttransmission T_{L} im sichtbaren Bereich des Lichtspektrums dargestellt. Der bei Untersuchung des Polarisationsverhältnisses verwendete Transmissionswinkel beträgt dabei 61° gemäß Tabelle 3a, während in Tabelle 3b das Polarisationsverhältnis der Schichtstapel unter 67° und in Tabelle 3c unter 55° gezeigt ist.

**Tabelle 3a**

| | optische Dicke der oberen dielektrischen Schichtenfolge | optische Dicke der unteren dielektrischen Schichtenfolge | Verhältnis ϕ | Polarisationsverhältnis in Transmission (p-pol./s-pol.) unter 61° | T_{L} in % |
|---|---|---|---|---|---|
| Beispiel 1 | 131 | 61 | 2,14 | 1,40 | 75,0 |
| Beispiel 2 | 141 | 61 | 2,31 | 1,41 | 73,5 |
| Beispiel 3 | 151 | 61 | 2,48 | 1,42 | 71,9 |
| Beispiel 4 | 161 | 61 | 2,64 | 1,43 | 70,5 |
| Beispiel 5 | 121 | 51 | 2,37 | 1,41 | 74,9 |
| Beispiel 6 | 131 | 51 | 2,57 | 1,42 | 73,3 |
| Beispiel 7 | 110 | 40 | 2,75 | 1,42 | 71,9 |
| Beispiel 8 | 151 | 51 | 2,96 | 1,44 | 70,2 |
| Vergleichsbeispiel 1 | 121 | 81 | 1,49 | 1,37 | 78,4 |
| Vergleichsbeispiel 2 | 141 | 81 | 1,74 | 1,38 | 75,5 |
| Vergleichsbeispiel 3 | 151 | 81 | 1,86 | 1,38 | 74,0 |
| Vergleichsbeispiel 4 | 161 | 81 | 1,99 | 1,39 | 72,5 |
| Vergleichsbeispiel 5 | 131 | 81 | 1,62 | 1,37 | 77,0 |
| Vergleichsbeispiel 6 | 130 | 40 | 3,25 | 1,44 | 68,6 |
| Vergleichsbeispiel 7 | 140 | 40 | 3,50 | 1,46 | 66,9 |
| Vergleichsbeispiel 8 | 150 | 40 | 3,75 | 1,47 | 65,2 |

**Tabelle 3b**

| | optische Dicke der oberen dielektrischen Schichtenfolge | optische Dicke der unteren dielektrischen Schichtenfolge | Verhältnis ϕ | Polarisationsverhältnis in Transmission (p-pol./s-pol.) unter 67° | T_{L} in % |
|---|---|---|---|---|---|
| Beispiel 2 | 141 | 61 | 2,31 | 1,56 | 73,5 |
| Beispiel 3 | 151 | 61 | 2,48 | 1,59 | 71,9 |
| Vergleichsbeispiel 1 | 121 | 81 | 1,49 | 1,52 | 78,4 |

**Tabelle 3c**

| | optische Dicke der oberen dielektrischen Schichtenfolge | optische Dicke der unteren dielektrischen Schichtenfolge | Verhältnis ϕ | Polarisationsverhältnis in Transmission (p-pol./s-pol.) unter 55° | T_{L} in % |
|---|---|---|---|---|---|
| Beispiel 2 | 141 | 61 | 2,31 | 1,30 | 73,5 |
| Beispiel 3 | 151 | 61 | 2,48 | 1,32 | 71,9 |
| Vergleichsbeispiel 1 | 121 | 81 | 1,49 | 1,26 | 78,4 |

Damit die erfindungsgemäße Windschutzscheibe gemäß gesetzlicher Bestimmungen als Windschutzscheibe zugelassen ist, muss die Gesamttransmission T_{L} durch die Windschutzscheibe (samt Reflexionsbeschichtung) mindestens 70% gemäß ECE-R 43, Anhang 3, § 9.1 betragen. Gleichzeitig muss für die Kompatibilität der HUD-Projektionsanordnung mit Kamerasystemen ein möglichst hohes Polarisationsverhältnis p-polarisierter Strahlung zu s-polarisierter Strahlung in Transmission vorliegen. Insbesondere sollten hierbei Polarisationsverhältnisse von mindestens 1,41 bei einem Transmissionswinkel von 61°, mindestens 1,59 bei einem Transmissionswinkel von 67° und 1,28 bei einem Transmissionswinkel von 55° erreicht werden. Dies ist vorteilhaft um die bei gängigen Kamerasystemen geforderten Spezifikationen zu erfüllen. In Beispielen 1 bis 8, bei denen das Verhältnis ϕ im erfindungsgemäßen Bereich liegt, werden bei einer Gesamttransmission von mindestens 70% gute Polarisationsverhältnisse erreicht. Die erfindungsgemäße HUD-Projektionsanordnung ist demnach insbesondere geeignet zur Verwendung mit Kamerasystemen.

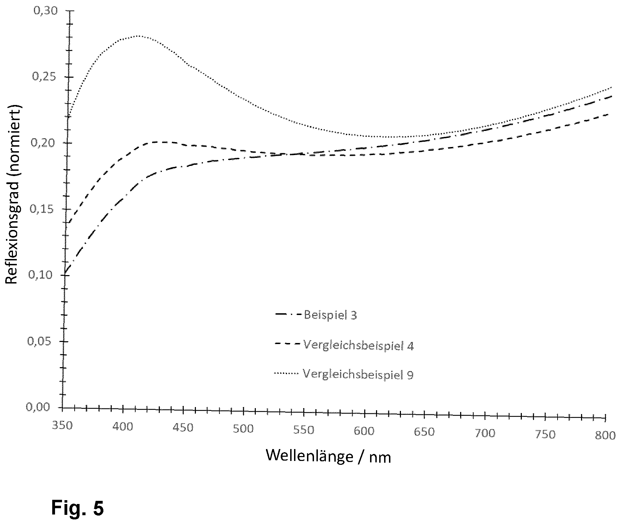

Figur 5 zeigt Reflexionsspektren von Verbundscheiben 10 mit einem Grundaufbau gemäß Figur 3, wobei jeweils erfindungsgemäße und nicht erfindungsgemäße Schichtaufbauten gemäß des erfindungsgemäßen Beispiels 3 nach Tabelle 1a sowie gemäß des nicht erfindungsgemäßen Vergleichsbeispiels 4 nach Tabelle 2a gezeigt sind. Zur besseren Einordnung der Spektren des Beispiels 3 und Vergleichsbeispiels 4 ist des Weiteren ein Reflektionsspektrum einer Verbundscheibe mit einem nicht erfindungsgemäßen Schichtaufbau gemäß Vergleichsbeispiel 9 nach Tabellen 4a und 4b gezeigt. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe 2 (die sogenannte innenraumseitige Reflexion) unter einem Einstrahlwinkel von 65° zur innenraumseitigen Flächennormalen. Die Reflexionsmessung ist also der Situation in der Projektionsanordnung angenähert.

**Tabelle 4a**

| Material | Bezugszeichen | | Schichtdicke |
|---|---|---|---|
| | | | Vergleichsbeispiel 9 |
| Kalk-Natron-Glas | 1 | | 2,1 mm |
| PVB | 3 | | 0,76 mm |
| SiN | 20 | 23a | 30 nm |
| SiZrN | | 23c | 10 nm |
| ZnO | | 23b | 10 nm |
| NiCr | | 24 | 0,3 nm |
| **Ag** | | **21** | **13 nm** |
| ZnO | | 22b | 10 nm |
| SiZrN | | 22c | 10 nm |
| SiN | | 22a | 50 nm |
| Kalk-Natron-Glas | 2 | 2,1 mm | |

**Tabelle 4b**

| | optische Dicke der oberen dielektrischen Schichtenfolge | optische Dicke der unteren dielektrischen Schichtenfolge | Verhältnis ϕ |
|---|---|---|---|
| Vergleichsbeispiel 9 | 102 | 142 | 0,72 |

Aus der graphischen Darstellung der Spektren ist ersichtlich, dass das erfindungsgemäße Beispiel 3 mit dem erfindungsgemäßen Verhältnis der optischen Dicken von oberer und unterer dielektrischer Schicht beziehungsweise Schichtenfolge einen ähnlichen Verlauf aufweist wie das nicht erfindungsgemäße Vergleichsbeispiel 4. In beiden Fällen wird ein vergleichsweise glattes Spektrum im interessierenden Spektralbereich von 400 nm bis 680 nm erreicht. Zur besseren Einordnung dessen wird ein Spektrum einer Verbundscheibe gemäß nicht erfindungsgemäßem Vergleichsbeispiel 9 gezeigt. Bei Vergleichsbeispiel 9 sind zwar auch relativ hohe gemittelte Reflexionswerte erreichbar, jedoch ist das Spektrum im relevanten Spektralbereich von 400 nm bis 680 nm starken Schwankungen unterworfen, was zu unerwünschten Farbverschiebungen des HUD-Bildes führen kann sowie zu einem schlechteren Farbeindruck der Scheibe für den Betrachter. Die im Vergleich dazu glatteren Spektren des Beispiels 3 und Vergleichsbeispiels 4 führen hingegen zu einer farbneutraleren Darstellung der HUD-Projektion. Außerdem wird der generelle Farbeindruck der Scheibe verbessert. Der Vergleich des erfindungsgemäßen Beispiels 3 mit Vergleichsbeispiel 4 zeigt, dass die vorteilhaften HUD-Eigenschaften der Verbundscheibe auch nach Optimierung des erfindungsgemäßen Schichtaufbaus hinsichtlich seiner Kamerakompatibilität erhalten bleiben. Die erfindungsgemäße HUD-Projektionsanordnung ist somit besonders geeignet zur Verwendung mit Kamerasystemen.

Alle Scheiben wiesen eine Lichttransmission von größer als 70% auf, so dass sie als Windschutzscheibe eingesetzt werden können.

### Bezugszeichenliste:

- (10): Windschutzscheibe

- (1): Außenscheibe
- (2): Innenscheibe
- (3): thermoplastische Zwischenschicht
- (4): Projektor
- (5): Betrachter / Fahrzeugfahrer
- (6): Sensor

- (20): Reflexionsbeschichtung
- (21): elektrisch leitfähige Schicht
- (22a): erste untere dielektrische Schicht / Entspiegelungsschicht
- (22b): zweite untere dielektrische Schicht / Anpassungsschicht
- (22c): dritte untere dielektrische Schicht / brechungsindexsteigernde Schicht
- (23a): erste obere dielektrische Schicht / Entspiegelungsschicht
- (23b): zweite obere dielektrische Schicht / Anpassungsschicht
- (23c): dritte obere dielektrische Schicht / brechungsindexsteigernde Schicht
- (24): metallische Blockerschicht

- (O): Oberkante der Windschutzscheibe 10
- (U): Unterkante der Windschutzscheibe 10
- (B): HUD-Bereich der Windschutzscheibe 10
- (E): Eyebox
- (S): Sensorbereich der Windschutzscheibe 10

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Windschutzscheibe (10) mit einem HUD-Bereich (B), umfassend eine Außenscheibe (1) mit einer Außenseite (I) und einer Innenseite (II) und eine Innenscheibe (2) mit einer Innenseite (III) und einer Außenseite (IV), wobei die Innenseite (II) der Außenscheibe (1) mit der Innenseite (III) der Innenscheibe (2) über eine thermoplastische Zwischenschicht (3) miteinander verbunden sind, und
- einen Projektor (4), der auf den HUD-Bereich (B) gerichtet ist;
wobei
- die Strahlung des Projektors (4) überwiegend p-polarisiert ist und
- die Windschutzscheibe (10) mit einer Reflexionsbeschichtung (20) versehen ist, die geeignet ist, p-polarisierte Strahlung zu reflektieren;
und wobei
- die Reflexionsbeschichtung (20) genau eine elektrisch leitfähige Schicht (21) auf Basis von Silber aufweist,
- unterhalb der elektrisch leitfähigen Schicht (21) eine untere dielektrische Schicht (22a) oder Schichtenfolge (22a, 22b, 22c) angeordnet ist, deren Brechungsindex mindestens 1,9 beträgt,
- oberhalb der elektrisch leitfähigen Schicht (21) eine obere dielektrische Schicht (23a) oder Schichtenfolge (23a, 23b, 23c) angeordnet ist, deren Brechungsindex mindestens 1,9 beträgt,
- das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) zwischen 2,10 und 3,20 beträgt und
- die Reflexionsbeschichtung (20) keine dielektrischen Schichten umfasst, deren Brechungsindex weniger als 1,9 beträgt,
wobei der Brechungsindex auf eine Wellenlänge von 550 nm bezogen ist und durch Ellipsometrie bestimmt wird,
und wobei
- die Windschutzscheibe (10) einen Sensorbereich (S) umfasst, in dem Strahlung durch die Reflexionsbeschichtung (20) hindurch fällt und von einem im Sensorbereich (S) vorgesehenen Sensor (6) detektiert werden kann,
- im Sensorbereich (S) an der Außenseite (IV) der Innenscheibe (2) ein Sensor (6) angebracht ist.

2. Projektionsanordnung nach Anspruch 1, wobei das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) zwischen 2,14 und 3,10, bevorzugt zwischen 2,30 und 2,98, besonders bevorzugt zwischen 2,50 und 2,97 beträgt.

3. Projektionsanordnung nach Anspruch 1 oder 2, wobei der Sensor (6) auf Ultraschall-, Radar-, Lidar- und/oder Kameratechnik, bevorzugt Kameratechnik, basiert.

4. Projektionsanordnung nach einem der Ansprüche 1 bis 3, wobei
- unterhalb der elektrisch leitfähigen Schicht (21) genau eine untere dielektrische Schicht (22a) mit einem Brechungsindex von mindestens 1,9 angeordnet ist, bevorzugt auf Basis von Siliziumnitrid, und/oder
- oberhalb der elektrisch leitfähigen Schicht (21) genau eine obere dielektrische Schicht (22a) mit einem Brechungsindex von mindestens 1,9 angeordnet ist, bevorzugt auf Basis von Siliziumnitrid.

5. Projektionsanordnung nach einem der Ansprüche 1 bis 4, wobei
- unterhalb der elektrisch leitfähigen Schicht (21) eine erste untere dielektrische Schicht (22a), bevorzugt auf Basis von Siliziumnitrid, und eine zweite untere dielektrische Schicht (22b), bevorzugt auf Basis von Zinkoxid, mit einem Brechungsindex von mindestens 1,9 angeordnet sind und/oder
- oberhalb der elektrisch leitfähigen Schicht (21) eine erste obere dielektrische Schicht (23a), bevorzugt auf Basis von Siliziumnitrid, und eine zweite obere dielektrische Schicht (23b), bevorzugt auf Basis von Zinkoxid, mit einem Brechungsindex von mindestens 1,9 angeordnet sind.

6. Projektionsanordnung nach einem der Ansprüche 1 bis 5, wobei
- unterhalb der elektrisch leitfähigen Schicht (21) eine erste untere dielektrische Schicht (22a), bevorzugt auf Basis von Siliziumnitrid, eine zweite untere dielektrische Schicht (22b), bevorzugt auf Basis von Zinnoxid, und eine dritte untere dielektrische Schicht (22c), bevorzugt auf Basis eines Silizium-Metall-Mischnitrids, insbesondere Silizium-Zirkonium-Mischnitrid oder Silizium-Hafnium-Mischnitrid, mit einem Brechungsindex von mindestens 1,9 angeordnet sind und/oder
- oberhalb der elektrisch leitfähigen Schicht (21) eine erste obere dielektrische Schicht (23a), bevorzugt auf Basis von Siliziumnitrid, eine zweite obere dielektrische Schicht (23b), bevorzugt auf Basis von Zinnoxid, und eine dritte obere dielektrische Schicht (23c), bevorzugt auf Basis eines Silizium-Metall-Mischnitrids, insbesondere Silizium-Zirkonium-Mischnitrid oder Silizium-Hafnium-Mischnitrid, mit einem Brechungsindex von mindestens 1,9 angeordnet sind.

7. Projektionsanordnung nach einem der Ansprüche 1 bis 6, wobei die Reflexionsbeschichtung (20) mindestens eine metallische Blockerschicht (24) umfasst, die oberhalb und/oder unterhalb der elektrisch leitfähigen Schicht (21) angeordnet ist und eine geometrische Dicke von weniger als 1 nm aufweist.

8. Projektionsanordnung nach einem der Ansprüche 1 bis 7, wobei die Außenscheibe (1) getönt oder gefärbt ist und eine Lichttransmission von mindestens 80% aufweist, wobei die Lichttransmission den bei einem Einstrahlwinkel von 0° transmittierten Strahlungsanteil innerhalb des sichtbaren Spektrums im Spektralbereich von 380 nm bis 780 nm beschreibt.

9. Projektionsanordnung nach einem der Ansprüche 1 bis 8, wobei die Strahlung des Projektors (4) im Wesentlichen rein p-polarisiert ist.

10. Projektionsanordnung nach einem der Ansprüche 1 bis 9, wobei die Strahlung des Projektors (4) mit einem Einfallswinkel von 55° bis 70° auf die Windschutzscheibe (10) trifft.

11. Projektionsanordnung nach einem der Ansprüche 1 bis 10, wobei die elektrisch leitfähige Schicht (21) eine geometrische Dicke von 10 nm bis 14 nm aufweist.

12. Projektionsanordnung nach einem der Ansprüche 1 bis 11, wobei die externen Oberflächen (I, IV) der Windschutzscheibe (10) im Wesentlichen parallel zueinander angeordnet sind.

13. Projektionsanordnung nach einem der Ansprüche 1 bis 12, wobei die Reflexionsbeschichtung (20) auf der zur Zwischenschicht (3) hingewandten Oberfläche (II, III) der Außenscheibe (1) oder der Innenscheibe (2) oder innerhalb der Zwischenschicht (3) angeordnet ist.

## Claims

1. Projection arrangement for a head-up display (HUD), at least comprising
- a windscreen (10), having a HUD region (B), comprising an outer pane (1) having an outer side (I) and an inner side (II) and an inner pane (2) having an inner side (III) and an outer side (IV), wherein the inner side (II) of the outer pane (1) and the inner side (III) of the inner pane (2) are connected to one another via a thermoplastic intermediate layer (3), and
- a projector (4) which is directed toward the HUD region (B);
wherein
- the radiation of the projector (4) is predominantly p-polarised and
- the windscreen (10) is provided with a reflective coating (20) which is suitable for reflecting p-polarised radiation;
and wherein
- the reflective coating (20) has exactly one electrically conductive layer (21) based on silver,
- a lower dielectric layer (22a) or layer sequence (22a, 22b, 22c), the refractive index of which is at least 1.9, is arranged below the electrically conductive layer (21),
- an upper dielectric layer (23a) or layer sequence (23a, 23b, 23c), the refractive index of which is at least 1.9, is arranged above the electrically conductive layer (21),
- the ratio of the optical thickness of the upper dielectric layer (23a) or layer sequence (23a, 23b, 23c) to the optical thickness of the lower dielectric layer (22a) or layer sequence (22a, 22b, 22c) is between 2.10 and 3.20 and
- the reflective coating (20) does not include dielectric layers with a refractive index of less than 1.9,
wherein the refractive index relates to a wavelength of 550 nm and is determined by ellipsometry,
and wherein
- the windscreen (10) includes a sensor region (S) in which radiation passes through the reflective coating (20) and can be detected by a sensor (6) provided in the sensor region (S),
- a sensor (6) is attached in the sensor region (S) on the outer side (IV) of the inner pane (2).

2. Projection arrangement according to claim 1, wherein the ratio of the optical thickness of the upper dielectric layer (23a) or layer sequence (23a, 23b, 23c) to the optical thickness of the lower dielectric layer (22a) or layer sequence (22a, 22b, 22c) is between 2.14 and 3.10, preferably between 2.30 and 2.98, particularly preferably between 2.50 and 2.97.

3. Projection arrangement according to claim 1 or 2, wherein the sensor (6) is based on ultrasound, radar, lidar and/or camera technology, preferably camera technology.

4. Projection arrangement according to any of claims 1 to 3, wherein
- exactly one lower dielectric layer (22a) having a refractive index of at least 1.9, preferably based on silicon nitride, is arranged below the electrically conductive layer (21), and/or
- exactly one upper dielectric layer (22a) having a refractive index of at least 1.9, preferably based on silicon nitride, is arranged above the electrically conductive layer (21).

5. Projection arrangement according to any of claims 1 to 4, wherein
- a first lower dielectric layer (22a), preferably based on silicon nitride, and a second lower dielectric layer (22b), preferably based on zinc oxide, which layers have a refractive index of at least 1.9, are arranged below the electrically conductive layer (21), and/or
- a first upper dielectric layer (23a), preferably based on silicon nitride, and a second upper dielectric layer (23b), preferably based on zinc oxide, which layers have a refractive index of at least 1.9, are arranged above the electrically conductive layer (21).

6. Projection arrangement according to any of claims 1 to 5, wherein
- a first lower dielectric layer (22a), preferably based on silicon nitride, a second lower dielectric layer (22b), preferably based on zinc oxide, and a third lower dielectric layer (22c), preferably based on a silicon-metal mixed nitride, in particular silicon-zirconium mixed nitride or silicon-hafnium mixed nitride, which layers have a refractive index of at least 1.9, are arranged below the electrically conductive layer (21), and/or
- a first upper dielectric layer (23a), preferably based on silicon nitride, a second upper dielectric layer (23b), preferably based on zinc oxide, and a third upper dielectric layer (23c), preferably based on a silicon-metal mixed nitride, in particular silicon-zirconium mixed nitride or silicon-hafnium mixed nitride, which layers have a refractive index of at least 1.9, are arranged above the electrically conductive layer (21).

7. Projection arrangement according to any of claims 1 to 6, wherein the reflective coating (20) comprises at least one metal blocker layer (24) which is arranged above and/or below the electrically conductive layer (21) and has a geometric thickness of less than 1 nm.

8. Projection arrangement according to any of claims 1 to 7, wherein the outer pane (1) is tinted or coloured and has a light transmission of at least 80%, wherein the light transmission describes the proportion of radiation transmitted at an angle of incidence of 0° within the visible spectrum in the spectral range from 380 nm to 780 nm.

9. Projection arrangement according to any of claims 1 to 8, wherein the radiation of the projector (4) is substantially purely p-polarised.

10. Projection arrangement according to any of claims 1 to 9, wherein the radiation of the projector (4) strikes the windscreen (10) at an angle of incidence of 55° to 70°.

11. Projection arrangement according to any of claims 1 to 10, wherein the electrically conductive layer (21) has a geometric thickness of 10 nm to 14 nm.

12. Projection arrangement according to any of claims 1 to 11, wherein the external surfaces (I, IV) of the windscreen (10) are arranged substantially in parallel with one another.

13. Projection arrangement according to any of claims 1 to 12, wherein the reflective coating (20) is arranged on the surface (II, III) of the outer pane (1) or the inner pane (2) facing the intermediate layer (3) or within the intermediate layer (3).

## Revendications

1. Agencement de projection pour un affichage tête haute (HUD), comprenant au moins
- un pare-brise (10) comportant une zone HUD (B), comprenant une vitre externe (1) comportant un côté externe (I) et un côté interne (II), et une vitre interne (2) comportant un côté interne (III) et un côté externe (IV), dans lequel le côté interne (II) de la vitre externe (1) et le côté interne (III) de la vitre interne (2) sont reliés entre eux par l'intermédiaire d'une couche intermédiaire thermoplastique (3), et
- un projecteur (4) qui est dirigé vers la zone HUD (B) ;
dans lequel
- le rayonnement du projecteur (4) est principalement polarisé p, et
- le pare-brise (10) est pourvu d'un revêtement réfléchissant (20) adapté pour réfléchir un rayonnement polarisé p ;
et dans lequel
- le revêtement réfléchissant (20) présente exactement une couche électroconductrice (21) à base d'argent,
- en dessous de la couche électroconductrice (21) est disposée une couche (22a) ou succession de couches diélectriques inférieures (22a, 22b, 22c) dont l'indice de réfraction est d'au moins 1,9,
- au-dessus de la couche électroconductrice (21) est disposée une couche (23a) ou succession de couches diélectriques supérieures (23a, 23b, 23c) dont l'indice de réfraction est d'au moins 1,9,
- le rapport entre l'épaisseur optique de la couche (23a) ou succession de couches diélectriques supérieures (23a, 23b, 23c) et l'épaisseur optique de la couche (22a) ou succession de couches diélectriques inférieures (22a, 22b, 22c) est compris entre 2,10 et 3,20, et
- le revêtement réfléchissant (20) ne comprend pas de couches diélectriques dont l'indice de réfraction est inférieur à 1,9,
dans lequel l'indice de réfraction est rapporté à une longueur d'onde de 550 nm et est déterminé par ellipsométrie, et dans lequel
- le pare-brise (10) comprend une zone à capteur (S) dans laquelle le rayonnement traverse le revêtement réfléchissant (20) et peut être détecté par un capteur (6) prévu dans la zone à capteur (S),
- un capteur (6) est monté dans la zone à capteur (S), sur le côté externe (IV) de la vitre interne (2).

2. Agencement de projection selon la revendication 1, dans lequel le rapport entre l'épaisseur optique de la couche (23a) ou succession de couches diélectriques supérieures (23a, 23b, 23c) et l'épaisseur optique de la couche (22a) ou succession de couches diélectriques inférieures (22a, 22b, 22c) est compris entre 2,14 et 3,10, de préférence entre 2,30 et 2,98, de manière particulièrement préférée entre 2,50 et 2,97.

3. Agencement de projection selon la revendication 1 ou 2, dans lequel le capteur (6) se base sur la technique des ultrasons, du radar, du lidar et/ou de la caméra, de préférence sur la technique de la caméra.

4. Agencement de projection selon l'une des revendications 1 à 3, dans lequel
- en dessous de la couche électroconductrice (21) est disposée exactement une couche diélectrique inférieure (22a) comportant un indice de réfraction d'au moins 1,9, de préférence à base de nitrure de silicium, et/ou
- au-dessus de la couche électroconductrice (21) est disposée exactement une couche diélectrique supérieure (22a) comportant un indice de réfraction d'au moins 1,9, de préférence à base de nitrure de silicium.

5. Agencement de projection selon l'une des revendications 1 à 4, dans lequel
- en dessous de la couche électroconductrice (21) sont disposées une première couche diélectrique inférieure (22a), de préférence à base de nitrure de silicium, et une deuxième couche diélectrique inférieure (22b), de préférence à base d'oxyde de zinc, comportant un indice de réfraction d'au moins 1,9, et/ou
- au-dessus de la couche électroconductrice (21) sont disposées une première couche diélectrique supérieure (23a), de préférence à base de nitrure de silicium, et une deuxième couche diélectrique supérieure (23b), de préférence à base d'oxyde de zinc, comportant un indice de réfraction d'au moins 1,9.

6. Agencement de projection selon l'une des revendications 1 à 5, dans lequel
- en dessous de la couche électroconductrice (21) sont disposées une première couche diélectrique inférieure (22a), de préférence à base de nitrure de silicium, une deuxième couche diélectrique inférieure (22b), de préférence à base d'oxyde de zinc, et une troisième couche diélectrique inférieure (22c), de préférence à base d'un nitrure mixte silicium-métal, en particulier d'un nitrure mixte silicium-zirconium ou d'un nitrure mixte silicium-hafnium, comportant un indice de réfraction d'au moins 1,9, et/ou
- au-dessus de la couche électroconductrice (21) sont disposées une première couche diélectrique supérieure (23a), de préférence à base de nitrure de silicium, une deuxième couche diélectrique supérieure (23b), de préférence à base d'oxyde de zinc, et une troisième couche diélectrique supérieure (23c), de préférence à base d'un nitrure mixte silicium-métal, en particulier d'un nitrure mixte silicium-zirconium ou d'un nitrure mixte silicium-hafnium, comportant un indice de réfraction d'au moins 1,9.

7. Agencement de projection selon l'une des revendications 1 à 6, dans lequel le revêtement réfléchissant (20) comprend au moins une couche de blocage métallique (24) qui est disposée au-dessus et/ou en dessous de la couche électroconductrice (21) et qui présente une épaisseur géométrique inférieure à 1 nm.

8. Agencement de projection selon l'une des revendications 1 à 7, dans lequel la vitre externe (1) est teintée ou colorée et présente une transmission de lumière d'au moins 80 %, dans lequel la transmission de lumière décrit la part de rayonnement transmise dans le spectre visible, dans le domaine spectral allant de 380 nm à 780 nm, à un angle d'incidence de 0°.

9. Agencement de projection selon l'une des revendications 1 à 8, dans lequel le rayonnement du projecteur (4) est sensiblement purement polarisé p.

10. Agencement de projection selon l'une des revendications 1 à 9, dans lequel le rayonnement du projecteur (4) atteint le pare-brise (10) à un angle d'incidence allant de 55° à 70°.

11. Agencement de projection selon l'une des revendications 1 à 10, dans lequel la couche électroconductrice (21) présente une épaisseur géométrique allant de 10 nm à 14 nm.

12. Agencement de projection selon l'une des revendications 1 à 11, dans lequel les surfaces externes (I, IV) du pare-brise (10) sont disposées de manière à être sensiblement parallèles entre elles.

13. Agencement de projection selon l'une des revendications 1 à 12, dans lequel le revêtement réfléchissant (20) est disposé sur la surface (II, III) de la vitre externe (1) ou de la vitre interne (2), laquelle surface est orientée vers la couche intermédiaire (3), ou à l'intérieur de la couche intermédiaire (3).
